**Europäisches Patentamt**

**European Patent Office**

**Office européen des brevets**

(19)

(11) Publication number : **0 438 278 B1**

# EUROPEAN PATENT SPECIFICATION

(12)

(45) Date of publication of patent specification :
13.04.94 Bulletin 94/15

(51) Int. Cl.⁵ : **C10G 29/20**

(21) Application number : **91300301.8**

(22) Date of filing : **16.01.91**

(54) Octane improvement process.

(30) Priority : **16.01.90 US 464922**

(43) Date of publication of application :
**24.07.91 Bulletin 91/30**

(45) Publication of the grant of the patent :
**13.04.94 Bulletin 94/15**

(84) Designated Contracting States :
**BE DE ES FR GB IT NL SE**

(56) References cited :
EP-A- 0 375 547
US-A- 4 849 569

(73) Proprietor : **CHEMICAL RESEARCH & LICENSING COMPANY**
**10100 Bay Area Boulevard**
**Pasadena, Texas 77507 (US)**

(72) Inventor : **Smith, Lawrence A.**
**5009 Pine Street**
**Houston, Texas 77401 (US)**
Inventor : **Hearn, Dennis**
**16326 Thunderbay**
**Houston, Texas 77062 (US)**
Inventor : **Arganbright, Robert P.**
**814 Devonport**
**Seabrook, Texas 77586 (US)**
Inventor : **Jones, Edward M.**
**806 Bonnie Doon**
**Friendswood, Texas 77546 (US)**

(74) Representative : **Cropp, John Anthony David et al**
**MATHYS & SQUIRE 10 Fleet Street**
**London, EC4Y 1AY (GB)**

## Description

This invention relates to improving the octane number of light reformate from a catalytic reforming unit.

BACKGROUND OF THE INVENTION

The reduction in the lead content of gasolines and the use of lead anti-knock compounds has lead to a search for other ways to improve the octane number of blending components for gasoline. The alternatives to uses of lead anti-knock compounds are chemical processing and the use of other additives.

One common process long used by the refinery industry to upgrade raw naphtha to high octane gasoline is catalytic reforming. In catalytic reforming the raw naphtha having a boiling range of circa 46-177°C (115-350°F) is passed over an alumina supported noble metal catalyst at elevated temperatures (493-510°C)(circa 920-950°F) and moderate pressure 1378-3790 kPag (circa 200-550 psig). The catalyst "reforms" the molecular structures of the hydrocarbons contained in the raw naphtha by removing hydrogen and rearranging the structure of the molecules so as to improve the octane number of the naphtha. However, the increase in octane number also reduces the liquid volume of the naphtha as the specific gravity is increased.

Because of the multiplicity of the compounds in the raw naphtha, the actual reactions which occur in catalytic reforming are numerous. However, some of the many resulting products are aryl or aromatic compounds, all of which exhibit high octane numbers. The aryl compounds produced depend upon the starting materials which in a refinery are controlled by the boiling range of the naphtha used and the crude oil source. The "reformed" product from a catalytic reforming process is commonly called reformate and is often separated into two fractions by conventional distillations--a light reformate having a boiling range of circa 46-121°C (115-250°F) and a heavy reformate having a boiling range of circa 121-177°C (250-350°F). The aryl compounds in each fraction are thus dependent upon their boiling points. The lower boiling or lighter aryl compounds, e.g., benzene, toluene and xylenes, are contained in the light reformate and higher boiling aryl compounds are contained in the heavy reformate.

The process of the present invention relates to further improvement of the octane number of the light reformate by combining the light reformate with an otherwise "waste gas" stream from another common refinery processing unit--a fluid catalytic cracking unit or FCCU. In fluid catalytic cracking a heavy "gas oil" stream having a boiling range circa 316-482°C (600-900°F) is combined with a fine catalytic substance, usually a zeolitic material, at elevated temperatures, about 482°C (900°F), which breaks apart or cracks the longer chain hydrocarbons to shorter chain hydrocarbons. In the absence of hydrogen (and suitable hydrogenation pressures) some unsaturated compounds are produced. Some gas is produced, the amount depending on the severity of the cracking, the gas also being rich in unsaturated compounds, i.e., ethylene, propenes, and butenes. Since the compounds have value, they are usually recovered and used or sold separately. However, the unsaturated compound or olefin separation results in "waste gas" having an olefin content of up to 10 mole per cent. This waste gas is normally used as fuel in the refinery heaters.

Recently a new method of carrying out catalytic reactions has been developed wherein the components of the reaction system are concurrently separable by distillation using the catalyst structures as the distillation structures. Such systems are described variously in U.S. Patents 4,215,011; 4,232,177; 4,242,530; 4,250,052; 4,302,356; 4,307,254; and 4,849,569. Briefly, a structure described there is a cloth belt with a plurality of pockets spaced along the belt containing a particulate catalyst, which is then wound in a helix about a spacing material such as stainless steel knitted mesh. These units are then disposed in a distillation column reactor. In addition, commonly assigned U.S. Patent 4,443,559 discloses a variety of catalyst structures for this use.

EP-A-0375547 describes a process for obtaining petrol with a low benzene content and or higher octane number in which formate is fractionated into a benzene enriched light fraction and a heavy fraction low in benzene. The light reformate is then reacted with a cracked gas containing mono-olefin in the presence of mordenite type catalyst with a Si:Al ratio higher than 20, to obtain an alkylated fraction. The alkylated fraction is then mixed with the heavy reformate.

SUMMARY OF THE INVENTION

In the present invention the waste gas is utilized to improve the octane number of the light reformate and at the same time increase its volume. Briefly, the present invention is a process for improving the octane number and increasing the volume of light reformate from a catalytic reforming unit, comprising:

(a) feeding a light reformate stream containing aryl compounds into a feed zone of distillation column reactor.

(b) feeding a gas stream from a catalytic cracking unit containing olefinic compounds into the feed zone, the aryl compounds being present in molar excess to the olefinic compounds;

(c) concurrently:

(1) forming alkylated aryl compounds having a higher octane number and a lower specific gravity than the aryl compounds in the light reformate stream by contacting the light reformate stream and the gas stream with a fixed bed acidic catalytic distillation structure in a distillation reaction zone.

(2) fractionating the resultant alkylated aryl compounds from unreacted material while maintaining a selected fraction of the light reformate stream in the distillation reaction zone to selectively react with the olefinic compounds to form alkylated aryl compounds;

(d) withdrawing the alkylated aryl compounds from the distillation column reactor at a point below the reaction zone; and

(e) withdrawing unreacted materials from the distillation column reactor at a point above the reaction zone.

The process preferably further comprises separating unreacted gas from unreacted light reformate and combining the alkylated aryl compounds with the unreacted light reformate, thereby providing a mixture having a higher octane number than the light reformate stream.

The aryl compounds preferably comprise benzene, toluene and xylenes and said olefinic compounds preferably comprise ethylene, propenes and butenes. The olefin may be contained in an FCCU off gas stream.

In addition to catalytically reacting a portion of said aryl compounds with said olefinic compounds, a portion of said aryl compounds is preferably transalkylated to form mono-alkylated aryl compounds.

The process preferably further comprises reacting alkyl benzenes and alkyl benzenes formed by contacting the light reformate stream and the gas stream with the fixed bed acidic catalytic distillation structure with benzene to form monoalkyl benzenes and fractionating the alkyl benzene from unreacted material; the alkyl benzenes having combined with unreacted light reformate.

Suitable acidic catalysts include molecular sieves (mole sieves), cation exchange resins and supported phosphoric acid.

More specifically the acid catalyst, e.g., mole sieve or cation exchange resin catalyst packing is of such a nature as to allow vapor flow through the bed, yet provide a sufficient surface area for catalytic contact as described in the previously noted U.S. Patent No.'s 4,443,559; 4,215,011 and 4,302,356. The catalyst packing is preferably arranged in the middle portion of the distillation column reactor.

BRIEF DESCRIPTION OF THE DRAWING

The drawing is a schematic representation of a preferred embodiment of one species of the present invention.

DETAILED DESCRIPTION OF THE INVENTION

The exact location of the waste gas feed will depend on the particular feeds and the desired product. In one embodiment the waste gas feed containing the olefinic compounds is preferably made below the catalyst bed thereby allowing mixing of the reactants before contact with the catalyst bed.

The reformate feed may be added at any point in the reactor, however, preferably it is added below the catalyst bed. Also, in order to achieve high selectivity toward monosubstitution (which is preferred aspect of the present invention), there is a large excess of the reformate to the olefin in the reactor in the range of 2 to 100 moles of reformate (organic aromatic compounds) per mole of olefin, that is the net molar feed ratio of aromatic organic compound to olefin may be close to 1:1, although the system is operated so as to maintain a substantial molar excess of aryl to olefin in the reaction zone. Due to the low concentration of olefinic compounds in the waste gas, the preferred molar ratio of 2 to 100:1 is fairly easy to obtain without overloading the column. The process also provides some transalkylation of the toluene in the light reformate by first forming di-alkyl benzene which combines with the benzene to form the mono-alkyl benzene. For instance, the ethylene in the gas may combine with benzene to form ethyl benzene, or with toluene to form ethyl, methyl benzene which may combine with other benzene to produce ethyl benzene.

A particularly unexpected benefit of the present process centers on the combined reaction distillation going on in the column. The reformate comprises a mixture of organic aromatic compounds boiling over a range. The product from the alkylation can be tailored by adjusting the temperature in the column to fractionate the reformate feed concurrently with the reaction of olefin and aromatic compound and the distillation of the alkylated product. Any cut can be made that is within the capacity of the equipment. For example the light end of the reformate can be taken overhead, heavies taken as bottoms and a high concentration of toluene maintained in the portion of the column containing the catalytic distillation structure. Thus the alkylation is primarily carried out with the toluene to produce a gasoline component of desirable properties, which can then be recombined with the other components of the reformate. This is not possible with a straight pass alkylation of the same components, where the resulting product would not be a discernable improvement, because there is an indiscriminate alkylation of the aromatic components in the reformate and olefin conversion would have to be kept very low because of the heat of reaction and polymerization of high concentration of olefins.

The alkylated product is the highest boiling material and is separated in the lower portion of the column usually as bottoms. The light reformate is the second highest boiling component. The success of catalytic distillation lies in an understanding of the principles associated with distillation. First, because the reaction is occurring concurrently with distillation, the initial reaction product is removed from the reaction zone as quickly as it is formed. The removal of the alkylation product minimizes polysubstitution, decomposition of the alkylation product and/or oligomerization of the olefinic compounds. Second, because the light reformate is boiling, the temperature of the reaction is controlled by the boiling point of that component at the system pressure. The heat of the reaction simply creates more boil up, but no increase in temperature. The reaction has an increased driving force because the reaction products have been removed and cannot contribute to a reverse reaction (Le Chateliers's Principle).

As a result, a great deal of control over the rate of reaction and distribution of products can be achieved by regulating pressure. Also the through-put (residence time = liquid hourly space velocity$^{-1}$) gives further control of product distribution and degree of olefin conversion.

The temperature in the reactor is determined by the boiling point of the liquid mixture present at any given pressure. The temperature in the lower portions of the column will reflect the constitution of the material in that part of the column, which will be higher than the overhead; that is, at constant pressure a change in the temperature of the system indicates a change in the composition in the column. To change the temperature the pressure is changed. Temperature control in the reaction zone is thus controlled by the pressure; by increasing the pressure, the temperature in the system is increased, and vice versa.

It can also be appreciated that in catalytic distillation as in any distillation there is both a liquid phase (internal reflux) and a vapor phase. Thus, the reactants are partially in liquid phase which allows for a low concentration of olefins in the reacting liquid, whereas, the concurrent fractionation separates product and unreacted materials, providing the benefits of a liquid phase system (and a vapor phase system) while avoiding the detriment of having all of the components of the reaction system continually in contact with the catalyst. High concentrations of olefin cause catalyst deactivation by polymerization and polysubstitution reactions.

The FCCU waste gas contains a variety of unrecovered olefins, however the preponderant olefinic compounds are ethylene, propylene (propenes) and butenes. The remainder of the gas is made up of various saturated hydrocarbons. Table I below gives an analysis of a typical waste gas used in the invention. The analysis was performed by gas chromatography and the components are given as weight per cent.

TABLE I

Typical Gas Analysis

| Component | wt. % |
|---|---|
| $C_1$ | 21.1 |
| $C_2=$ | 11.1 |
| $C_2$ | 12.7 |
| $C_3=$ | 30.6 |
| $C_3$ | 7.9 |
| $C_4=$ | 0.4 |
| $C_4$ | 0.7 |
| $C_5+$ | 0.1 |
| $N_2$ | 13.5 |
| $H_2$ | 1.7 |
| $CO_2$ | 0.3 |

As may be seen from the analysis of the waste gas the typical total olefin content is 42.1 per cent, divided into ethylene, 11.1 per cent; propane, 30.6 per cent; and butenes and higher, 0.4 per cent.

A typical light reformate with a research octane number of 87.4 and an ASTM boiling range of 67 to 115°C (152 to 239 °F) has an analysis as shown in Table II.

## TABLE II

### Typical Light Reformate Analysis

| Component | wt. % |
|---|---|
| $C_3$ to $C_8$ non aromatics | 55.5 |
| Benzene | 9.5 |
| Toluene | 32.5 |
| Ethylbenzene + Xylenes | 2.0 |
| $C_9$ aromatics | 0.2 |
| $C_{10}$ aromatics | 0.2 |
| $C_{11}$ aromatics | 0.2 |

While it will be appreciated that the light reformate analysis is dependent upon the composition of the raw naphtha, all light reformates contain some of the aryl compounds shown above to a greater or lesser extent.

In any case the olefinic compounds contained in the waste gas will always haves a lower boiling point that the light reformate.

In a particular embodiment which is of current commercial importance ethylene or propylene in the waste gas is reacted with benzene in the light reformate according to the present invention to form ethyl benzene or cumene, respectively. In both of these reactions the olefin is the most volatile component and it is desirable to react it rather than have some carried off overhead.

The length of the catalyst bed, particularly that portion wherein the reactants are in contact and the major portion of the reaction occurs, depends on the reactants, location of the olefin feed and the acceptable unreacted olefin in the streams leaving the tower. Some degree of development testing will be required for each set of reactants (as determined by crude source of the raw naphtha and the waste gas composition) and parameters of stream purity following present disclosures.

The present alkylation reaction can be carried out at sub- through super atmospheric pressure, e.g., 20.2-4053kPa (0.20 to 40 atmospheres). The temperature will vary depending on the reactants and product. Furthermore, the temperature slong the column will be as in any distillation column; the highest temperature will be in the bottom and the temperature along the column will be the boiling point of the compositions at that point in the column under the particular conditions of pressure. Moreover, the exothermic heat of reation does not change the temperature in the column, but merely causes more boil up. However, the temperatures within the column with the above considerations in mind will generally be in the range of 70°C to 500°C for the mole sieve and 70°C to 150°C for the cation exchange resin, and more preferably in the range of about 80°C to 300°C at pressures of 50.7 to 5066kPa (0.5 to 50 atmospheres) for the mole sieve and about 80°C to 150°C at 25.3 to 1013kPa (.25 to 10 atmospheres) for the resin catalyst.

Molecular sieves are porous crystalline, three-dimensional alumina-silicates of the zeolite mineral group. The crystal skeleton is composed of silicon and aluminum atoms each surrounded by four oxygen atoms to form a small pyramid or tetrahedron (tetrahedral coordination).

The term molecular sieve can be applied to both naturally occurring zeolites and synthetic zeolites. Naturally occurring zeolites have irregular pore size and are not generally considered as equivalent to synthetic zeolites. In the present invention, however, naturally occurring zeolites are acceptable so long as they are substantially pure. The balance of the present discussion shall be directed to the synthetic zeolites with the understanding that natural zeolites are considered equivalent thereto as indicated above, i.e. in so far as the natural zeolites are the functional equivalents to the synthetic zeolites.

Usually synthetic zeolites are prepared in the sodium form, that is, with a sodium cation in close proximity to each aluminum tetrahedron and balancing its charge.

To date four principal types of molecular sieves have been reported, A, X, Y and L erionite, omega, beta and mordenite. The A type have relative small pore size. By the term pore size is meant the effective pore size (diameter) rather than the free pore size (diameter). Types X and Y have larger pore size (approximately 10 Å.) and differ as to the range of ratio of $Al_2O_3$ to $SiO_2$ as:

Type X - - - - - - - - - - - - - - $Al_2O_3/2.0 - 3.0$ $SiO_2$

Type Y - - - - - - - - - - - - - - $Al_2O_3/3.0 - 6.0$ $SiO_2$

Type L, beta and other types listed have still higher ratios of $SiO_2$ to $Al_2O_3$.

The mole sieve catalysts employed in the present invention are the acid form mole sieves or exhibit acidic characteristics. The acid form of the mole sieves is commercially available, but also may be prepared by treating

5

EP 0 438 278 B1

the mole sieves with acid to exchange Na for hydrogen. Another method to produce the acid form is to treat the mole sieve with decomposable cations (generally ammonium ions) to replace Na with the decomposable ions and thereafter to heat the mole sieve to decompose the cation leaving the acid form. Generally the Na form mole sieve is treated with soluble ammonium salts to remove the Na and thereafter the mole sieve is heated to a temperature of about 350°C to remove the ammonia. The removal of $Na^+$ ions with $NH^+_4$ is more easily carried out than with multivalent ions as described below and these catalysts are generally more active, but less stable to heat than the multivalent cation exchange forms. Mole sieves, which have had their alkali metal reduced to low levels by partial treatment with $NH^+_4$ and partial multivalent metal cation exchange, possess increased activity and increased stability.

In addition to mole sieves which are acidic according to the Brönsted Theory, those mole sieves which exhibit acidic characteristics under the Lewis Theory, for example, calcium exchanged mole sieves are suitable for the present reaction. By exchanging the univalent cations (e.g. $Na^+$) with multivalent cation, strong ionic activity is imparted. The ratio of $SiO_2:Al_2O_3$, valence and radius of the cation and the extent of exchange all affect the catalyst activity. In general activity increases with (1) increased $SiO_2:Al_2O_3$ ratio, (2) decreased cation radius and an increase in cation valence. The effect of replacing univalent ions (e.g. $Na^+$) with bivalent (e.g. $Ca^{++}$) is much greater than replacing the bivalent ions with cations of greater valence.

The various types of mole sieves having reduced alkali metal content are characterized as the acid form molecular sieve and are all contemplated as useful in the present invention.

It would appear that the pore size within the crystal lattice may affect selectivity. According to one theory of molecular sieve catalytic activity, zeolite catalysis occurs primarily inside the uniform crystal cavities, consequently zeolitic catalyst activity depends on the number of aluminum atoms in the crystal and thus on the chemical composition of the crystal. Moreover, these catalytic sites are fixed within the rigid structure of the crystal, so that access to site can be altered by altering the structure of the crystal.

The acid form mole sieves are generally produced and available as particles in the range of < 10 µm (powders) to 5.08mm (0.2 inch) in diameter (beads).

In this form the mole sieves form too compact a bed and will not function adequately in a distillation, since there is a very large pressure drop through the bed and the free flow of internal reflux and rising vapor is impeded. Mole sieves in the shape of conventional distillation structures, such as rings, saddles, and the likes may be used in the present invention. The particulate mole sieves may be employed by enclosing them in a porous container such as cloth, screen wire or polymeric mesh. The material used to make the container must be inert to the reactants and conditions in the reaction system. The cloth may be any material which meets this requirement such as cotton, fiber glass, polyester, nylon and the like. The screen wire may be aluminum, steel, stainless steel and the like. The polymer mesh may be nylon, teflon or the like. The mesh or threads per inch of the material used to make the container is such that the catalyst is retained therein and will not pass through the openings in the material. Particles of about 0.15mm size or powders may be used and particles up to about 6.35mm (1/4 inch) diameter may be employed in the containers.

Suitable acid cation exchange resins include those which contain sulfonic acid groups, and which may be obtained by polymerization or copolymerization of aromatic vinyl compounds followed by sulfonation. Examples of aromatic vinyl compounds suitable for preparing polymers or copolymer are: styrene, vinyl toluene, vinyl naphthalene, vinyl ethylbenzene, methyl styrene, vinyl chlorobenzene and vinyl xylene. A large variety of methods may be used for preparing these polymers; for example, polymerization alone or in admixture with other monovinyl compounds, or by crosslinking with polyvinyl compounds; for example, with divinyl benzene, divinyl toluene, divinyl phenylether and others. The polymers may be prepared in the presence or absence of solvents or dispersing agents, and various polymerization initiators may be used, e.g., inorganic or organic peroxides, persulfates, etc.

The sulfonic acid group may be introduced into these vinyl aromatic polymers by various known methods; for example, by sulfating the polymers with concentrated sulfuric and chlorosulfonic acid, or by copolymerizing aromatic compounds which contain sulfonic acid groups (see e.g., US Pat. No. 2,366,007). Further sulfonic acid groups may be introduced into the polymers which already contain sulfonic acid groups; for example, by treatment with fuming sulfuric acid, i.e., sulfuric acid which contains sulfur trioxide. The treatment with fuming sulfuric acid is preferably carried out at 0 to 150° C and the sulfuric acid should contain sufficient sulfur trioxide so that it still contains 10 to 50% free sulfur trioxide after the reaction. The resulting products preferably contain an average of 1.3 to 1.8 sulfonic acid groups per aromatic nucleus. Particularly, suitable polymers which contain sulfonic acid groups are copolymers of aromatic monovinyl compounds with aromatic polyvinyl compounds, particularly, divinyl compounds, in which the polyvinyl benzene content is preferably 1 to 20% by weight of the copolymer (see, for example, German Patent Specification 908,240). The ion exchange resin is generally used in a granular size of about 0.25 to 1 mm, although particles from 0.15 mm up to about 2 mm may be employed.

6

The finer catalysts provide high surface area, but also result in high pressure drops through the reactor. The macroreticular form of these catalysts have much larger surface area exposed and limited swelling which all of these resins undergo in a non-aqueous hydrocarbon medium compared to the gelular catalysts.

The container employed to hold the catalyst particles may have any configuration, such as the pockets disclosed in the commonly assigned patents above or the container may be a single cylinder, sphere, doughnut, cube, tube or the like.

Each container containing a solid catalytic material comprises a catalyst component. Each catalyst component is intimately associated with a spacing component which is comprised of at least 70 volume % open space up to about 95 volume % open space. This component may be rigid or resilient or a combination thereof. The combination of catalyst component and spacing component forms the catalytic distillation structure. The total volume of open space for the catalytic distillation structure should be at least 10 volume % and preferably at least 20 volume % up to about 65 volume %. Thus, desirably the spacing component or material should comprise about 30 volume % of the catalytic distillation structure, preferably about 30 volume % to 70 volume %. Resilient materials are preferred. One suitable such material is open mesh knitted stainless wire, known generally as demister wire or an expanded aluminum. Other resilient components may be similar open mesh knitted polymeric filaments of nylon, teflon and the like. Other materials such as highly open structures foamed material, e.g., reticulated polyurethane foam (rigid or resilient) may be formed in place or applied around the catalyst component.

In the case of larger catalyst components such as from about 6.35mm to 12.7mm (1/4 inch to 1/2) pellets, spheres, pills and the like, each such larger component may be individually intimately associated with or surrounded by the spacing component as described above.

It is not essential that the spacing component, entirely cover the catalyst component. It is only necessary that the spacing component intimately associated with the catalyst component will act to space the various catalyst components away form one another as described above. Thus, the spacing component provides in effect a matrix of substantially open space in which the catalyst components are randomly but substantially evenly distributed.

A preferred catalyst distillation structure for use herein comprises placing particulate catalyst, e.g., the mole sieve or cation exchange resin particles, into a plurality of pockets in a cloth belt, which is supported in the distillation column reactor by open mesh knitted stainless steel wire by twisting the two together in a helical form. This allows the requisite flows and prevents loss of catalyst. The cloth may be any material which is inert in the reaction. Cotton or linen are useful, but fiber glass cloth or "Teflon" cloth are preferred.

In the following examples the catalyst packing consisted of bags in the form of a fiber glass cloth belt approximately 152.4mm (six inches) wide with narrow pockets approximately 19.05mm (3/4 inch) wide sewn across the belt. The pockets are spaced about 6.35mm (1/4 inch) apart. These pockets are filled with the catalyst particles to form approximately cylindrical containers, and the open ends are then sewn closed to confine the particles. This belt is then twisted into a helical form to fit inside the column. Twisted in with the belt is also a strip of an open mesh knitted stainless steel wire, which serves to separate the mole sieve filled cloth pockets and provide a passage for vapor flow.

The wire mesh provides the support for the catalyst (belt) and provides some degree of vapor passage through the catalyst particles, which otherwise form a very compact bed which has a high pressure drop. Thus, the down flowing liquid is in intimate contact with the rising vapors in the column.

In commercial-scale operations, it is contemplated, catalyst packing would be made up of alternating layers of mole sieve filled cloth belts similar to the ones described above, and a spacing material which could be of any convenient, suitable substance, such as a corrugated wire screen or wire cloth or a knitted wire mesh. The layers would be arranged vertically or horizontally. For simplicity of fabrication and for better distribution of vapor flow passages, a vertical orientation is preferred. The height of a section of this packing could be of any convenient dimension, from a few inches to several feet. For ease of assembly and installation, the packing would be made into sections of the desired shape and size, each section fastened together with circumferential bands of tie wires depending on its size and shape. A complete assembly in a column would consist of several sections, arranged in layers, with possibly the orientation of the catalyst-filled belts turned at right angles in successive layers to improve liquid and vapor flow distribution.

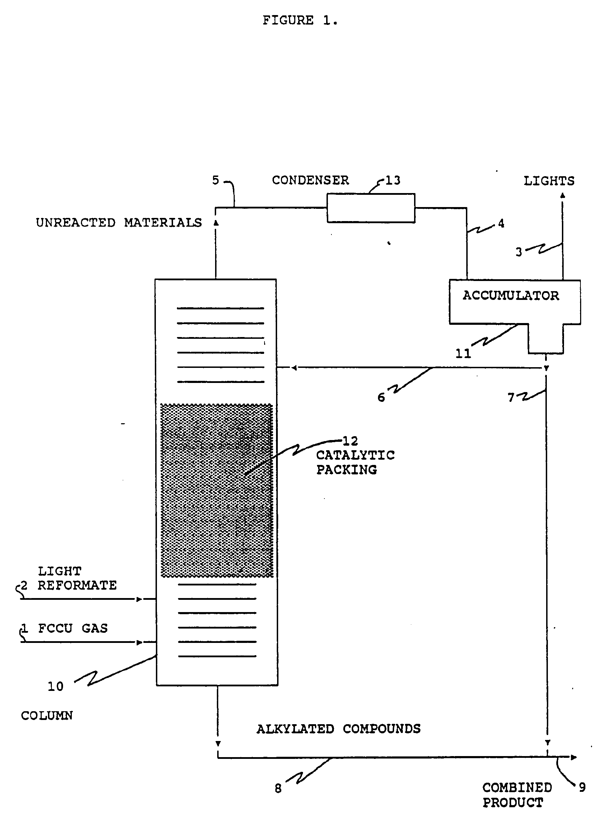

Referring now to FIGURE 1, a generalized flow diagram is pictured. The distillation column reactor is depicted at 10 with the upper and lower quarters of the column filled with standard distillation structure, e.g., packing or trays. The middle half of the column is filled with the catalytic distillation structure as packing indicated at 12. The light reformate feed is fed into the column below the catalytic reaction zone 12 via line 2. The FCCU gas is fed into the column below the catalytic reaction zone 12 via line 1. The olefinic compounds in the FCCU gas react with the aryl compounds in the light reformate in the reaction zone to form higher boiling alkylated aryl compounds which are distilled off the catalyst into the lower distillations section. Any unreacted light reformate and FCCU gas which might be carried downward are boiled back up into the reaction zone for further reaction, while the alkylated product exits the bottom of the column through line 8. Generally the unreacted lighter components are taken overhead through line 5 to condenser 13 where the unreacted light reformate is condensed. The combined unreacted products (gas and reformate) are then passed to accumulator 11 through line 4 where the gasses are allowed to become separated from the liquid reformate. The unreacted gasses are taken out the top of the accumulator via line 3 and the liquid light reformate taken out where it may be sent back to the distillation column as reflux via line 6 to the reaction zone or recombined with the alkylated product via line 7. The recombined product, having a higher octane number and a lower specific gravity than the original light reformate may be taken to storage via line 9.

Such conventional items as valves, reboilers, slip streams, etc. are not shown, but would be obvious expedients to those setting up such equipment.

In one embodiment of the invention, the light reformate may be fed to the accumulator and thus to the reaction zone with the reflux. The following examples indicate the efficacy of the process.

EXAMPLE 1

Two 10.67m (35 foot) distillation towers, one a 101.6mm (4 inch) I.D. unit and other a 76.2mm (3 inch) I.D. unit were connected to simulate a single tall fractionation tower. The 101.6mm (4 inch) tower was used as a fractionation tower, packed with 15.9mm (5/8 inch) Pall rings. The overhead vapor form that tower went to the bottom of the 76.2mm (3 inch) tower from which the liquid bottoms were pumped to the top of the first tower. The 76.2mm (3 inch) tower had the bottom 9.1m (30 feet) packed with LZY 82 molecular sieve (Union Carbide Corp., Linde division), packed as described earlier. The light reformate (see Table II for analysis) was fed to the 101.6mm (4 inch) column 3m (10 feet) below the top, while the olefin containing feed was fed 1.5m (5 feet) below the top. The total product out was the liquid overhead from the 76.2mm (3 inch) column blended back with the bottoms form the 101.6mm (4 inch) column. Propylene gas diluted with nitrogen to 50% was used as the olefin feed in one run to simulate dilute olefin. Conditions and results of two runs are shown in Table III.

## TABLE III

| Run No. | 1 | 2 |
|---|---|---|
| Feed, (lbs./hr) Kg/h | | |
| Propylene | (5.3)2.4 | (5.0)2.3 |
| Ethylene | — | — |
| Light reformate | (40.0)18.1 | (25.0)11.3 |
| Pressure, (psig) KPag | (98-92)675.7-634.3 | (98-92)675.7-634.3 |
| Temp. across Cat. Bed., (°F)°C | (360-260)182-126 | (370-300)187-167 |
| Conversion of Olefin, % | 92 | 85 |
| Selectivity to $C_9 + C_{10}$, % | 68 | 82 |
| Conversion of Benzene, % | 20 | -- |
| Conversion of Toluene, % | 50 | -- |
| Effect of nitrogen dilution | none | not tested |
| | | |
| Octane Increase over Light Reformate Feed | | |
| RON Increase | +4.5 | +4.0 |
| MON Increase | +5.0 | +3.5 |
| | | |
| Average Boiling Range, (°F | 110-447) | |
| °C | 43-231 | |

Example 2

A 101.6mm (4 inch) diameter pilot plant column, divided into two towers each 12.2m (40 feet) in height connected with a vapor flow pipe and a liquid recycle pump, was used. The upper 6.1m (20 feet) of the first column and the lower 6.1m (20 feet) of the second column was packed with catalyst as described. The lower 6.1m (20 feet) of the second column and the upper 6.1m (20 feet) of the first were filled with conventional distillation packing.

Light reformate with the analysis and characteristics shown in Table IV was fed into the second column above the catalyst zone a rate of 73.8kg/h (163 lbs./hr). A gas having a composition as shown in Table I was fed into the first column just below the catalyst zone at a rate of 28.0kg/h (61.9 lbs./hr). The temperature in the catalyst zone was controlled at 180°C by controlling the column pressure at 641.2kPag (93 psig). The resultant bottoms and recycle was 45.3kg/h (99.9 lbs./hr). with and overhead stream of 36.5kg/h (80.6 lbs./hr.) and vent of 21.3kg/h (47.0 lbs./hr).

Table IV, below, shows a material balance around the catalytic distillation unit with flow rates in kg/h (lbs./hr).

### TABLE IV

| | In | | Out | | OH | | Vent | | Recycle | | Btms | |
|---|---|---|---|---|---|---|---|---|---|---|---|---|
| **TOTAL** | | | | | | | | | | | | |
| Gas | 29.3 | (64.7) | 23.1 | (50.8) | 3.1 | (6.8) | 19.4 | (42.8) | 0.0 | (0.0) | 0.6 | (1.3) |
| Light Reformate | | | | | | | | | | | | |
| $C_5-C_7$ | 4.0 | (8.8) | 4.0 | (8.8) | 3.3 | (7.3) | 0.7 | (1.5) | 0.0 | (0.0) | 0.0 | (0.0) |
| Xylene | 26.6 | (58.7) | 20.7 | (45.8) | 1.9 | (4.1) | 0.0 | (0.0) | 0.0 | (0.0) | 18.8 | (41.6) |
| $C_8-C_9$ | 14.8 | (32.6) | 14.8 | (32.6) | 12.6 | (27.8) | 1.0 | (2.1) | 0.0 | (0.0) | 1.2 | (2.7) |
| Toluene | 27.5 | (60.6) | 18.0 | (39.8) | 15.7 | (34.6) | 0.3 | (0.6) | 0.0 | (0.0) | 4.6 | (4.6) |
| Alkylated Xylene | 0.5 | (1.1) | 8.6 | (18.9) | 0.0 | (0.0) | 0.0 | (0.0) | 0.0 | (0.0) | 8.6 | (18.9) |
| Alkylated Toluene | 0.5 | (1.0) | 14.0 | (30.8) | 0.0 | (0.0) | 0.0 | (0.0) | 0.0 | (0.0) | 14.0 | (30.8) |
| TOTALS | 103.1 | (227.5) | 103.1 | (227.5) | 36.5 | (80.6) | 21.3 | (47.0) | 0.0 | (0.0) | 45.3 | (99.9) |

The blending research octane of toluene is 111.5 as compared to 112.5 for the alkylated toluene.

EP 0 438 278 B1

## Claims

1. A process for improving the octane number and increasing the volume of light reformate from a catalytic reforming unit, comprising:

    (a) feeding a light reformate stream containing aryl compounds into a feed zone of distillation column reactor.

    (b) feeding a gas stream from a catalytic cracking unit containing olefinic compounds into the feed zone, the aryl compounds being present in molar excess to the olefinic compounds;

    (c) concurrently:

    (1) forming alkylated aryl compounds having a higher octane number and a lower specific gravity than the aryl compounds in the light reformate stream by contacting the light reformate stream and the gas stream with a fixed bed acidic catalytic distillation structure in a distillation reaction zone.

    (2) fractionating the resultant alkylated aryl compounds from unreacted material while maintaining a selected fraction of the light reformate stream in the distillation reaction zone to selectively react with the olefinic compounds to form alkylated aryl compounds;

    (d) withdrawing the alkylated aryl compounds from the distillation column reactor at a point below the reaction zone; and

    (e) withdrawing unreacted materials from the distillation column reactor at a point above the reaction zone.

2. A process according to Claim 1 further comprising separating unreacted gas from unreacted light reformate and combining the alkylated aryl compounds with the unreacted light reformate, thereby providing a mixture having a higher octane number than the light reformate stream.

3. A process according to Claim 1 or Claim 2 where said aryl compounds comprise benzene, toluene and xylenes and said olefinic compounds comprise ethylene, propenes and butenes.

4. A process according to Claim 3 wherein said olefin is contained in an FCCU off gas stream.

5. A process according to Claim 3 or Claim 4 wherein in addition to catalytically reacting a portion of said aryl compounds with said olefinic compounds, a portion of said aryl compounds is transalkylated to form monoalkylated aryl compounds.

6. A process according to any one of Claims 1 to 5, wherein said catalyst is Y-type molecular sieve, omega-type molecular sieve, beta-type molecular, sieve, cation exchange resin or supported phosphoric acid.

7. A process according to any one of Claims 1 to 6, characterised in that a fraction of the reformate having a boiling point corresponding to benzene is maintained in the distillation reaction zone.

8. A process according to any one of Claims 1 to 6, characterised in that a fraction of the reformate having a boiling point corresponding to toluene is maintained in the distillation reaction zone.

9. A process according to Claims 8, characterised in that a lower boiling fraction of the light reformate is removed from the distillation column reactor as overheads and a higher boiling fraction of the light reformate is removed as bottoms from the distillation reactor column.

10. A process according to Claim 9, characterised in that the higher and lower boiling factions are recombined with the alkylated aryl compounds.

11. A process according to any one of Claims 1 to 7, characterised in that the process further comprises reacting alkyl benzenes and alkyl benzenes formed by contacting the light reformate stream and the gas stream with the fixed bed acidic catalytic distillation structure with benzene to form monoalkyl benzenes and fractionating the alkyl benzene from unreacted material; the alkyl benzenes having combined with unreacted light reformate.

**Patentansprüche**

1. Verfahren zur Verbesserung der Oktanzahl und zur Erhöhung des Volumens an leichtem Reforming-Produkt aus einer katalytisch arbeitenden Reforming-Einheit, welches die Schritte umfaßt, daß man

   (a) einen leichten Reforming-Produkt-Strom, der Aryl-Verbindungen enthält, einer Beschickungszone eines Destillations-Säulenreaktors zuführt;

   (b) einen Gasstrom aus einer katalytisch arbeitenden Crack-Einheit, der olefinische Verbindungen enthält, der Beschickungszone zuführt, wobei die Aryl-Verbindungen in molarem Überschuß über die Olefin-Verbindungen zugegen sind;

   (c) gleichzeitig

   (1) alkylierte Aryl-Verbindungen mit einer höheren Oktanzahl und einem niedrigeren spezifischen Gewicht als die Aryl-Verbindungen in dem leichten Reforming-Produkt-Strom bildet, indem man den leichten Reforming-Produkt-Strom und den Gasstrom mit einer sauren Festbett-Struktur zur katalytischen Destillation in einer Destillations-Reaktions-Zone in Kontakt bringt;

   (2) die resultierenden alkylierten Aryl-Verbindungen von dem nicht umgesetzten Material durch fraktionierte Destillation abtrennt, während man eine gewählte Fraktion des leichten Reforming-Produkt-Stroms in der Destillations-Reaktions-Zone zur selektiven Reaktion mit den olefinischen Verbindungen unter Bildung alkylierter Aryl-Verbindungen hält;

   (d) die alkylierten Aryl-Verbindungen aus dem Destillations-Säulen-Reaktor an einem Punkt unterhalb der Reaktionszone abzieht; und

   (e) nicht umgesetzte Materialien aus dem Destillations-Säulen-Reaktor an einem Punkt oberhalb der Reaktionszone abzieht.

2. Verfahren nach Anspruch 1, welches außerdem den Schritt umfaßt, daß man nicht umgesetztes Gas von nicht umgesetztem leichtem Reforming-Produkt abtrennt und die alkylierten Aryl-Verbindungen mit dem nicht umgesetzten leichten Reforming-Produkt zusammen gibt und dadurch eine Mischung bereitstellt, die eine höhere Oktanzahl aufweist, als der leichte Reforming-Produkt-Strom.

3. Verfahren nach Anspruch 1 oder Anspruch 2, worin die Aryl-Verbindungen Benzol, Toluol, und Xylole umfassen und die olefinischen Verbindungen Ethylen, Propene und Butene umfassen.

4. Verfahren nach Anspruch 3, worin das Olefin in einem FCCU-Abgasstrom enthalten ist.

5. Verfahren nach Anspruch 3 oder Anspruch 4, worin zusätzlich zur katalytischen Umsetzung eines Teils der Aryl-Verbindungen mit den Olefinverbindungen ein Teil der Aryl-Verbindungen unter Bildung monoalkylierter Aryl-Verbindungen transalkyliert wird.

6. Verfahren nach einem der Ansprüche 1 bis 5, worin der Katalysator ein Molekularsieb des Y-Typs, ein Molekularsieb des Omega-Typs, ein Molekularsieb des Beta-Typs, ein Kationaustauschharz oder auf einem Träger aufgezogene Phosphorsäure ist.

7. Verfahren nach einem der Ansprüche 1 bis 6, dadurch gekennzeichnet, daß eine Fraktion des Reforming-Produktes mit einem Siedepunkt, der dem von Benzol entspricht, in der Destillations-Reaktions-Zone gehalten wird.

8. Verfahren nach einem der Ansprüche 1 bis 6, dadurch gekennzeichnet, daß eine Fraktion des Reforming-Produktes mit einem Siedepunkt, der dem des Toluols entspricht, in der Destillations-Reaktions-Zone gehalten wird.

9. Verfahren nach Anspruch 8, dadurch gekennzeichnet, daß eine niedriger siedende Fraktion des leichten Reforming-Produkts von dem Destillations-Säulenreaktor als Überkopfprodukt abgetrennt wird und eine höher siedende Fraktion des leichten Reforming-Produkts als Sumpfprodukt aus der Destillations-Reaktor-Säule abgetrennt wird.

10. Verfahren nach Anspruch 9, dadurch gekennzeichnet, daß die höher und niedriger siedenden Fraktionen mit den alkylierten Aryl-Verbindungen wieder vereinigt werden.

11. Verfahren nach einem der Ansprüche 1 bis 7, dadurch gekennzeichnet, daß das Verfahren außerdem den Schritt umfaßt, daß man Alkylbenzole und Alkylbenzole, die durch In-Kontakt-Bringen des leichten Reforming-Produkt-Stroms und des Gasstroms mit der sauren Festbett-Struktur zur katalytischen Destillation gebildet wurden, mit Benzol unter Bildung von Monoalkylbenzolen umsetzt und die Alkylbenzole durch fraktonierte Destillation von nicht umgesetztem Material abtrennt, wobei sich die Alkylbenzole mit nicht umgesetzten leichten Reforming-Produkt vereinigt haben.

**Revendications**

1. Procédé pour améliorer l'indice d'octane et augmenter le volume du reformat léger provenant d'une unité de reformage catalytique, comprenant :

   (a) l'introduction d'un courant de reformat léger contenant des composés aryles dans une zone d'alimentation d'un réacteur à colonne de distillation,

   (b) l'introduction d'un courant gazeux provenant d'une unité de craquage catalytique contenant des composés oléfiniques dans la zone d'alimentation, les composés aryles étant présents en excès molaire par rapport aux composés oléfiniques;

   (c) parallèlement :

      (1) la formation de composés aryles alkylés ayant un indice d'octane supérieur et un poids spécifique inférieur à ceux des composés aryles dans le courant de reformat léger par mise en contact du courant de reformat léger et du courant gazeux avec une structure de distillation catalytique acide à lit fixe dans une zone de réaction par distillation;

      (2) le fractionnement des composés aryles alkylés résultants de la matière n'ayant pas réagi, tandis qu'une fraction sélectionnée du courant de reformat léger est maintenue dans la zone de réaction par distillation pour réagir sélectivement avec les composés oléfiniques afin de former des composés aryles alkylés;

   (d) le soutirage des composés aryles alkylés du réacteur à colonne de distillation en un point situé endessous de la zone de réaction; et

   (e) le soutirage des matières n'ayant pas réagi du réacteur à colonne de distillation en un point au-dessus de la zone de réaction.

2. Procédé suivant la revendication 1, comprenant de plus la séparation du gaz n'ayant pas réagi du reformat léger n'ayant pas réagi et la combinaison des composés aryles alkylés avec le reformat léger n'ayant pas réagi, de façon à fournir un mélange ayant un indice d'octane supérieur à celui du courant de reformat léger.

3. Procédé suivant les revendications 1 ou 2, dans lequel ces composés aryles comprennent du benzène, du toluène et des xylènes, et ces composés oléfiniques comprennent de l'éthylène, des propènes et des butènes.

4. Procédé suivant la revendication 3, dans lequel cette oléfine est contenue dans un courant de gaz d'échappement de FCCU.

5. Procédé suivant les revendications 3 ou 4, dans lequel en plus de la réaction catalytique d'une partie de ces composés aryles avec ces composés oléfiniques, une partie de ces composés aryles est transalkylée pour former des composés aryles monoalkylés.

6. Procédé suivant l'une quelconque des revendications 1 à 5, dans lequel ce catalyseur est un tamis moléculaire de type Y, un tamis moléculaire de type oméga, un tamis moléculaire de type béta, une résine d'échange de cation ou un acide phosphorique supporté.

7. Procédé suivant l'une quelconque des revendications 1 à 6, caractérisé en ce qu'une fraction du reformat ayant un point d'ébullition correspondant au benzène est maintenue dans la zone de réaction par distillation.

8. Procédé suivant l'une quelconque des revendications 1 à 6, caractérisé en ce qu'une fraction du reformat ayant un point d'ébullition correspondant au toluène est maintenue dans la zone de réaction par distillation.

9. Procédé suivant la revendication 8, caractérisé en ce qu'une fraction de point d'ébullition inférieur du reformat léger est enlevée du réacteur à colonne de distillation en tant que têtes et qu'une fraction de point d'ébullition supérieur du reformat léger est éliminée en tant que queues de la colonne de réaction par distillation.

10. Procédé suivant la revendication 9, caractérisé en ce que les fractions de point d'ébullition inférieur et supérieur sont recombinées avec les composés aryles alkylés.

11. Procédé suivant l'une quelconque des revendications 1 à 7, caractérisé en ce que le procédé comprend de plus la réaction d'alkyl benzènes et d'alkyl benzènes formés par mise en contact du courant de reformat léger et du courant gazeux avec la structure de distillation catalytique acide en lit fixe avec du benzène pour former des benzènes monoalkyles et le fractionnement des alkyl benzènes de la matière n'ayant pas réagi, les alkyl benzènes étant combinés avec le reformat léger n'ayant pas réagi.

FIGURE 1.

5 ⌐     CONDENSER    ⌐13     LIGHTS

UNREACTED MATERIALS

4

3

ACCUMULATOR

11

6       7

12
CATALYTIC
PACKING

LIGHT
2 REFORMATE

1 FCCU GAS

10

COLUMN

ALKYLATED COMPOUNDS

8      COMBINED   9
PRODUCT

15